# EUROPEAN PATENT APPLICATION

(11) **EP 4 852 344 A1**
(43) Date of publication of application: **09.12.2026**
(21) Application number: 25315199.7
(22) Date of filing: 05.06.2025
(51) Int. Cl.: H04B 10/079, H04B 10/85

(54) **DETECTION OF CONCEALED EAVESDROPPING IN OPTICAL NETWORKS**

(71) Applicant: Nokia Solutions and Networks Oy, 02610 Espoo (FI)
(72) Inventor: Delezoide, Camille, 78950 Gambais (FR); Boitier, Fabien, 91300 Massy (FR); Layec, Patricia, 92220 Bagneux (FR)
(74) Representative: Loyer & Abello

(57) **Abstract**

A method for detecting loss-compensated eavesdropping in an optical network includes estimating an optical power profile along a lightpath in the optical network based on a received digital waveform detected by a coherent optical receiver of the lightpath. The received digital waveform includes a contribution from amplified spontaneous emission accumulated along the lightpath. The method further comprises comparing the estimated optical power profile to a saved reference optical power profile to detect an injection of extra ASE into the lightpath.

## Description

### TECHNICAL FIELD

The present disclosure generally relates to optical networks, and more particularly relates to event monitoring in optical networks.

### BACKGROUND

Optical networks play a paramount role in modern telecommunications, supporting an increasingly high number of critical services. Information traveling in optical fibers can be very sensitive, and subject to malicious interception attempts, commonly referred to as eavesdropping. Detecting and localizing eavesdropping attempts are critical to preserving information transmission security in optical networks.

### SUMMARY

An aspect of the present disclosure relates to a method for detecting loss-compensated eavesdropping in an optical network. The method comprises estimating a first optical power profile (OPP) along a lightpath in the optical network based on a received digital waveform detected by a coherent optical receiver of the lightpath, the received digital waveform comprising amplified spontaneous emission (ASE) accumulated along the lightpath. The method further comprises comparing the first OPP to a reference OPP to detect an injection of extra ASE into the lightpath.

An aspect of the present disclosure relates to an apparatus for detecting a loss-compensated eavesdropping in an optical network. The apparatus comprises a digital processor, an interface coupled to the digital processor, and a memory coupled to the digital processor. The interface is configured to receive data collected from a coherent optical receiver in the optical network, the data comprising information indicative of a received digital waveform detected by the coherent optical receiver. The memory comprises instructions which, when executed by the processor, cause the processor to estimate a first optical power profile (OPP) along a lightpath in the optical fiber network based on a received digital waveform detected by the coherent optical receiver, the received digital waveform comprising amplified spontaneous emission (ASE) accumulated along the lightpath, and to compare the first OPP to a reference OPP to detect an injection of extra ASE along the lightpath.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1 is a diagram schematically illustrating an optical fiber link of an optical network with loss-compensated eavesdropping on one of an optical fiber spans of the link;
FIG. 2 is a block diagram of an example coherent optical receiver according to an embodiment;
FIG. 3 is a flowchart of a method for detecting loss-compensated eavesdropping according to an embodiment;
FIG. 4 is a block diagram illustrating an example computer-implemented algorithm to estimate an optical power profile along a lightpath based on a coherent detection of an optical data signal received over the lightpath;
FIG. 5A is a graph illustrating an example OSNP difference profile *F(z)* along a 400-km long lightpath according to simulations;
FIG. 5B is a graph illustrating a segment of the example OSNP difference profile *F(z)* of FIG. 5A along an optical fiber span of the lightpath subject to loss-compensated eavesdropping (top panel), and first and second derivatives thereof (middle and bottom panels, respectively);
FIG. 6 is a flowchart of an example method for detecting the location of extra ASE injection according to an embodiment;
FIG. 7 is a schematic block diagram of a network monitoring system coupled to an optical fiber network for detecting and localizing eavesdropping events;
FIG. 8 is a schematic block diagram of a network monitoring system according to an embodiment.

### DETAILED DESCRIPTION

In the following description, for purposes of explanation and not limitation, specific details are set forth, such as particular circuits, circuit components, techniques, etc. in order to provide a thorough understanding of the example embodiments described. However, it will be apparent to one skilled in the art that the present disclosure may be practiced in other embodiments, embodiments that may depart from these specific details. In other instances, detailed descriptions of well-known methods, devices, and circuits may be omitted so as not to obscure the description of the exampled embodiments. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example".

Furthermore, the following abbreviations and acronyms may be used in the present document:
"ASE": Amplified Spontaneous Emission
"QAM" Quadrature Amplitude Modulation
"WDM": Wavelength Division Multiplexing
"RHS" Right-Hand Side
"AWGN": Additive White Gaussian Noise
"BER': Bit Error Ratio
"FEC": Forward Error Correction
"LP": Lightpath
"ML": Machine Learning
"OTDR": Optical Time Domain Reflectometry
"OFDR": Optical Frequency Domain Reflectometry
"OPM": Optical Power Monitor
"OSP" Optical Signal Power
"OSNP" Optical Signal plus Noise Power
"OSNR" Optical Signal to Noise Ratio
"OPP" Optical Power Profile
"ONP" Optical Noise Power
"PPE" Power Profile Estimation
"eNP1": enhanced Nonlinear Perturbation 1^{st} order
"TIA": Trans-Impedance Amplifier
"ADC": Analog to Digital Converter

The term "FEC" refers to a process of forward error correction at the optical receiver; "pre-FEC" and "post-FEC" measurements refer to signal measurements performed on the received signal before and after FEC, respectively. The term "lightpath" refers to an all-optical signal path from an optical transmitter at one node of an optical fiber network to an optical receiver at another node of the optical fiber network. The term "optical fiber link" refers to a physical medium of an all-optical signal path between two nodes of an optical network, typically comprising a sequence of optical amplifiers serially connected by spans of optical fibers ("optical fiber spans"). An optical fiber link may support a plurality of lightpaths, each of the lightpaths on the optical fiber link typically using a distinct wavelength channel.

Examples described below relate to an apparatus, system, and method for detecting and localizing concealed, loss-compensated eavesdropping events in optical networks based on information available from coherent optical receivers.

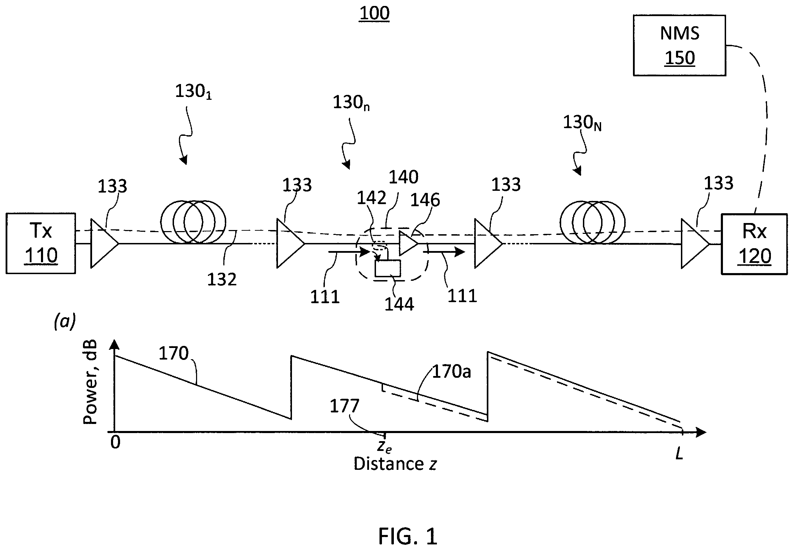

FIG. 1 schematically illustrates an example optical fiber link 100 subject to concealed loss-compensated eavesdropping. The optical fiber link 100 supports a lightpath 132 extending from an optical transmitter (Tx) 110 to a coherent optical receiver (Rx) 120, and includes a sequence of optical fiber spans 130₁, ..., 130*ₙ*, ..., 130_{N} connected in series between the Rx 120 and the Tx 110 ("spans 130"). In operation, the Tx 110 transmits light 111 modulated with data signals to be detected by the Rx 120 at the other end of the lightpath 132. The coherent Rx 120 may be connected to a network monitoring system (NMS) 150 configured to collect transmission performance information from the coherent Rx 120. The NMS 150 may include one or more computers, which may be co-located with the coherent Rx 120 or may be located remotely and communicate with the coherent Rx 120 via a data communication network (DCN). The optical fiber link 100 further includes a series of optical amplifiers 133 to (pre)compensate for the optical loss in the optical fiber spans 130. Each of the line optical amplifiers 133 also injects amplified spontaneous emission (ASE) into the optical fiber link 100, adding optical noise to the optical signal carried by the light 111. An insert (a) shown in FIG. 1 below the optical fiber link 100 schematically illustrates a profile 170 of optical power, *P*(*z*), of the light 111 along the optical fiber link 100 ("optical power profile", or OPP) for an example optical fiber link 100 of length *L* comprising three optical fiber spans 130. The light 111 transmitted by the Tx 110 exponentially decays in power between each consecutive pair of the line optical amplifiers 133 due to the optical fiber loss of the spans 130 and is re-amplified by each of the line optical amplifiers 133 to a desired level prior to entering the next optical fiber span 130. This results in a sawtooth wave shape of the optical power profile 170 of the light 111 when expressed in decibel (dB).

FIG. 1 further shows an example eavesdropping apparatus 140 that is connected to one of the optical fiber spans 130, denoted 130ₙ, of the optical fiber link 100 at a location 177, longitudinal location coordinate zₑ (i.e. at a distance zₑ from the Tx 110 along the optical fiber link 100). The eavesdropping apparatus 140 includes an optical tap 142 connected to an eavesdropping optical receiver (eRx) 144. The optical tap 142, typically a directional optical fiber coupler, is configured to tap off some part of light 111 propagating in the optical fiber span 130n, to direct the tapped-off light to the receiver 144 to eavesdrop on communications carried by the light 111. The addition of optical tap 142 introduces extra optical loss into the optical fiber span 130n, which changes the optical power profile 170 to a modified profile 170a, e.g. as schematically indicated in the insert (a) by a dashed line. This change may be detected by monitoring the optical power downstream from the eavesdropping apparatus 140, e.g., at the input and/or output of one of the optical amplifiers 133 between the eavesdropping apparatus 140 and the Rx 120.

In order to compensate for the added optical loss of the optical tap 142 and to conceal the eavesdropping, the eavesdropping apparatus 140 may include a compensating optical amplifier 146. The compensating optical amplifier 146 may be either downstream of the optical tap 142 as illustrated in FIG. 1, or upstream thereof. The gain of the compensating optical amplifier 146 may be tuned to compensate for the insertion optical loss of the optical tap 142. The loss compensation may be sufficiently precise to hinder the detection of the optical tap 142 based on the optical power monitoring alone.

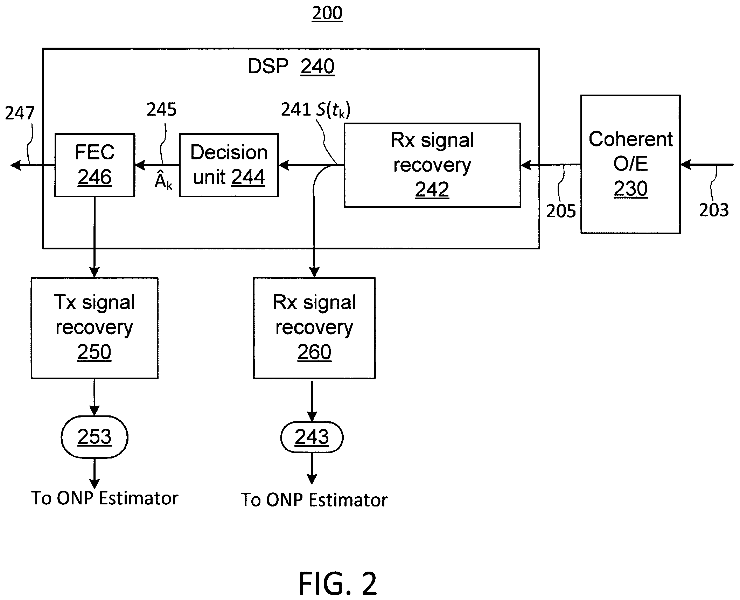

Although the presence of the compensating optical amplifier 146 can effectively hide the insertion loss of the optical tap 142, the optical amplification adds some amount of extra ASE ("optical noise") to the light 111 downstream of the eavesdropping apparatus 140. Thus, even if the insertion of the eavesdropping apparatus 140 does not modify the total optical power of the light 111 downstream of the eavesdropping apparatus 140, the optical signal to noise ratio (OSNR) at the Rx 120 will be reduced because of the combination of the insertion loss of the optical tap 142 and the ASE injection by the compensating optical amplifier 146. Examples described below with reference to FIGs. 2-8 relate to a technique for detecting the presence and location of such concealed, loss-compensated eavesdropping by digitally processing a coherently detected optical signal at the end of the optical fiber link 100 such as to obtain an optical power profile along the optical fiber link 100 that includes a contribution from various ASE sources along the link, and analyzing the obtained optical power profile to sense the extra ASE added by the loss-compensated eavesdropping. The technique may be implemented at the coherent Rx 120 and/or the NMS 150.

There are known power profile estimation (PPE) techniques that may be used to digitally reconstruct an optical power profile of an optical signal component of the light 111 along the optical fiber link 100 based on an optical signal waveform that is coherently detected by the Rx 120 ("Rx waveform"). The ability to estimate an optical signal power (OSP) profile along a lightpath based on an optical waveform coherently detected at the Rx end of the lightpath leverages an interplay between chromatic dispersion (CD) and optical nonlinearity effects in the optical fiber along the lightpath. Operations describing these effects do not commute, which enables reconstructing the evolution of an optical signal along a lightpath, e.g., 132, based on optical signal waveforms at the ends of the lightpath. A conventional PPE technique digitally reconstructs an optical signal waveform transmitted by the Tx ("reconstructed Tx waveform") based on the coherently detected optical signal (e.g., 241, FIG. 2) at the Rx end of the lightpath, and applies a non-linear propagation algorithm to the reconstructed Tx waveform (e.g., 253, FIG. 2) to estimate an OSP profile *P_{S}*(*z*) along the lightpath that best approximates the Rx waveform (e.g. 243, FIG. 2).

FIG. 2 illustrates a schematic block diagram of an optical receiver (Rx) 200, which may be an example of the coherent Rx 120. The optical receiver 200 includes a coherent optoelectric (O/E) converter 230 and a digital signal processor (DSP) 240. The coherent O/E converter 230 typically includes a number of components that are not shown in FIG. 2, such as a local optical oscillator, e.g. a narrow-linewidth semiconductor laser, an optical hybrid/mixer(s) for mixing a light signal 203 received from an optical fiber link (e.g., 100) with light from the local optical oscillator, and one or more photodetectors coupled to an output of the optical hybrid/mixer(s) and followed by one or more TIAs and an ADC. The coherent O/E converter 230 converts the received light signal 203 into a digital electrical signal 205 that is provided to the DSP 240. The DSP 240 ("receiver DSP") is configured to implement an Rx signal processing unit 242, a decision unit 244, and a forward error correction (FEC) decoder 246. The light signal 203 is an example of the light 111 at the input of the coherent Rx 120. The Rx signal processing unit 242 is configured to process the digital electrical signal 205 received from the coherent O/E converter 230 to obtain a stream of complex signal samples *S*(*tₖ*) *241, t*ₖ indicating the sampling times. The Rx signal processing unit 242 may implement such functions as carrier, clock, and phase recovery, chromatic dispersion (CD) compensation, polarization demultiplexing, PMD compensation, etc. The decision unit 244 makes symbol decisions on the signal samples 241 to map them on a symbol constellation used at an optical transmitter generating the light signal 203, e.g., the Tx 110. The FEC decoder 446 performs FEC decoding on a data stream 243 received from the decision unit 249 to output a post-FEC data signal 247 typically having at least a reduced number of bit and/or symbol errors. The post-FEC data signal 247 may be a data output of the optical receiver 200.

In some implementations, the post-FEC data signal 247 may be used, e.g., by a Tx signal recovery unit 250, to digitally reconstruct an optical signal waveform 253 generated at the optical transmitter, e.g. the Tx 110, at the other end of the optical fiber link ("reconstructed Tx waveform 253"). The reconstructed Tx waveform 253 may be in the form of a sequence of Tx waveform samples *E*_{Tx}(*tₖ*) corresponding to constellation symbols of the transmitted modulation format, such as BPSK, QPSK, QAM, or the like. The Tx signal recovery unit 250 may be implemented in the DSP 240 or by a separate digital processor, e.g., in the NMS 150.

The stream of signal samples *S*(*tₖ*) 241 may represent an optical signal waveform at the input of the coherent optical receiver, e.g., Rx 120, modified to remove the CD accumulated in the optical fiber link 100. An Rx signal recovery unit 260 may be used to digitally reconstruct an Rx signal waveform 243 at the input of the Rx 200 ("Rx waveform 243"), e.g., in the form of a sequence of received waveform samples *E*_{Rx}(*tₖ*), by re-loading the removed CD into the stream of signal samples *S*(*tₖ*) *241.*

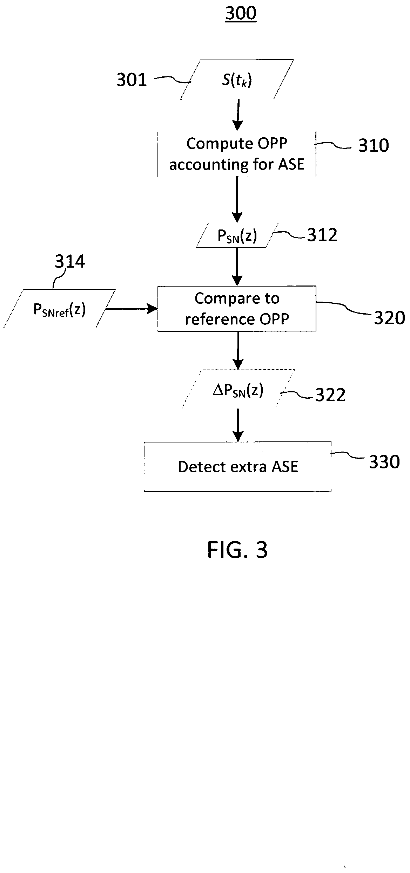

FIG. 3 shows a flowchart of method 300 for detecting loss-compensated eavesdropping in an optical fiber link (e.g., 100) based on a signal detected by a coherent optical receiver (e.g., Rx 120 or Rx 200) at the end of the optical fiber link. Method 300 leverages, and extends, the receiver-based PPE described above to detect an injection of extra ASE into the optical signal propagating along the optical fiber link, and to determine the location of the injection of the extra ASE. In the embodiment illustrated in FIG. 3, method 300 includes step 310 of computing an optical power profile 312 for the optical fiber link that comprises a contribution from the ASE generated along the optical fiber link. The optical power profile 312 may be computed based on a sequence 301 of received signal samples S(tₖ) obtained from the coherent optical receiver, the received signal samples 301 comprising a contribution from optical noise, e.g., the ASE, accumulated along the optical fiber link. The optical power profile 312, denoted hereinbelow *P*_{SN}(*z*), may also be referred to as the first optical power profile or the optical signal plus noise power (OSNP) profile. The sequence of received signal samples 301 may be comprised, e.g., of a time sequence of the optical signal samples 241. Method 300 further includes step 320 of comparing the OSNP profile 312 to a reference optical power profile 314, P_{SNref}(z). The reference optical power profile 314 may be, e.g., an instance of the OSNP profile 312 obtained at an earlier time for the same optical fiber link, or an optical power profile obtained based on two or more earlier obtained instances of the OSNP profile 312 for the same optical fiber link, e.g., using averaging. Step 320 may be followed by step 330 of detecting an injection of added extra ASE based on the comparison at step 320. In an example implementation, step 320 may include computing a difference profile 322, ΔP_{SN}(z) = [*P*_{SN}(*z*)-P_{SNref}(z)], between the OSNP profile 312 and the reference profile 314. The difference profile 322 may also be referred as the OSNP change profile 322. Step 330 may include analyzing the difference profile 322 to detect extra ASE compared to the reference profile, which may indicate the presence of loss-compensated eavesdropping in the optical fiber link at the location of the extra ASE injection. Step 330 may further include determining the location of the extra ASE injection along the optical fiber link 100.

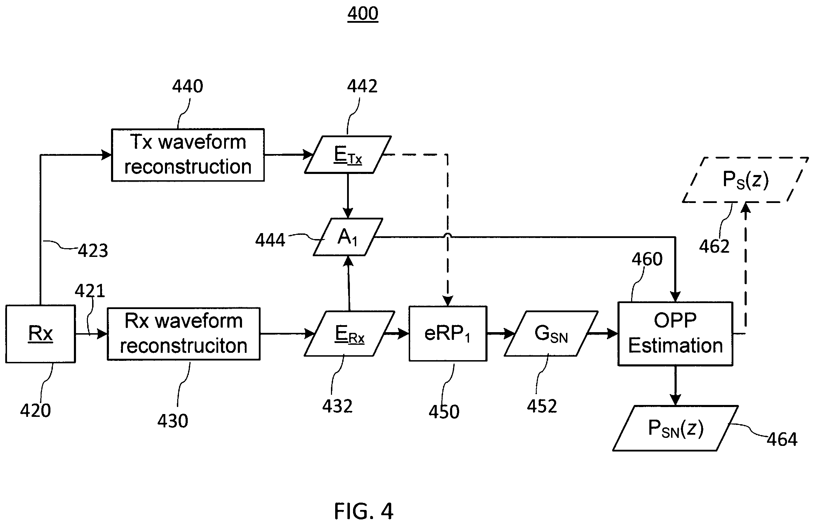

FIG. 4 shows a block diagram illustrating digital signal processing at step 310 of method 300 according to an example embodiment. In operation, an Rx DSP 420 generates a sequence of signal samples 421 and a sequence of hard symbol decisions 423. The Rx DSP 420 may be an example of the Rx DSP 240, the sequence of signal samples 421 may be an example of the sequence of signal samples 241, and the sequence of hard symbol decisions 423 may be an example of the sequence of the post-FEC data signal 247 (FIG. 2). The sequence of hard symbol decisions 423 is used by a Tx waveform reconstruction unit 440 to compute a Tx waveform 442. The Tx waveform reconstruction unit 440 may be an example of the Tx signal recovery unit 250 of FIG. 2, and the Tx waveform 442 E_{Tx} may be an example of the reconstructed Tx waveform 253. The sequence of signal samples 421 is used by an Rx waveform reconstruction unit 430 to compute an Rx waveform 432. The Rx waveform reconstruction unit 430 may be an example of the Rx signal recovery unit 260 of FIG. 2, and the Rx waveform 432 E_{Rx} may be an example of the Rx waveform 243. The Rx waveform 432 E_{Rx} is then provided as an input to an eRP1 processing unit 450. The eRP1 processing unit 450 applies a first order enhanced regular perturbation (eRP₁) algorithm to the Rx waveform 432 to generate a nonlinear perturbation matrix 452 G_{SN}. The eRP1 algorithm simulates non-linear propagation of an input optical waveform along an optical fiber line, and is described, for example, by T. Sasai et al, in "Linear Least Squares Estimation of Fiber-Longitudinal Optical Power Profile", Journal of Lightwave Technology, Vol. 42, No. 6, March 15, 2024. Conventionally, the eRP1 algorithm implemented by the eRP1 processing unit 450 is applied to the reconstructed Tx waveform 442 and provides an OSP profile 462, as indicated by dashed lines in FIG. 4; the OSP profile 462, denoted P_{S}(z), does not directly account for contribution from optical noise such as the ASE generated along the lightpath. Using the Rx waveform 432 as the input to the eRP1 unit 450 allows computing an OSNP profile 464, which is an example of the OSNP profile 312 and does comprise a contribution from the ASE.

In order to assist in understanding of the described examples, the following notations may be used in the description below. The notation A(*z*, *T·n*) refers to a complex amplitude of an n-th optical symbol in an *N*-long sequence of optical symbols after propagating a distance z in an optical fiber link of length *L, T* being a symbol period; here "*z*" denotes a spatial coordinate along the optical fiber link of length *L*, with *z*=0 indicating the location of the optical transmitter (e.g., Tx 110) and *z*=*L* indicating the location of the optical receiver (e.g., coherent Rx 120). Accordingly, the notations A(0, *T·n*) and A(*L*, *T·n*) refer to the complex amplitudes of an *n*-th transmitted symbol at the Tx 110 and the Rx 120, respectively; *n* = 0, ..., *N*-1. Using vector notations, the digitally reconstructed Rx waveform 432 may be described by a complex-valued vector **A**[*L*] = [*A*(*L,* 0), ..., *A*(*L, nT*), ..., *A*(*L,* (*N -* 1)*T*)]^{T}. Similarly, the digitally reconstructed Tx waveform 442 may be described by a complex-valued vector **A**[0] = [*A*(0, 0), ..., *A*(0, *nT*), ..., *A*(0, (*N* - 1)*T*)]^{T}. Here [·]^{T} indicates a vector transpose operation.

In accordance with the eRP₁ algorithm, the Rx waveform 432 **E**_{Rx} is approximately represented as a sum of a liner waveform **A**₀(*L*) and a first-order non-linear perturbation waveform **A**₁(*L*): ${E}_{Rx} = A \left[L\right] ≅ {A}_{0} \left[L\right] + {A}_{1} \left[L\right] ,$ (1)

In an example implementation, the Tx waveform reconstruction unit 440 maps the (post-FEC) hard symbol decisions 423 onto a symbol constellation used at the Tx, e.g. Tx 110. In computations, the reconstructed Tx waveform 442, **E**_{Tx}, may be represented by a complex-valued *N*-vector A[0], i.e., **E**_{Tx}= A[0]. The nonlinear perturbation waveform **A₁**[*L*] 444 may be computed from equation (1), e.g., by first computing the linear waveform **A**₀[*L*]. The linear waveform **A**₀[*L*] may be computed by applying a link-worth of chromatic dispersion to the reconstructed Tx waveform 442 E_{Tx}.

Applying the eRP1 algorithm (the eRP1 unit 450) directly to the Rx waveform 432 takes the ASE into account. The application of the eRP1 algorithm to the Rx waveform 432 yields a nonlinear perturbation matrix **G**_{SN} 452. Columns **g**ₖ of the matrix G_{SN} may be computed by applying dispersion and non-linear operators to the reconstructed Rx waveform **A**[0] 432 for a sequence of link locations zₖ; here "*k*" is a location index along the optical fiber link. Since the Rx waveform 432 includes a contribution from the ASE noise accumulated in the propagation along the optical fiber link, the nonlinear perturbation matrix **G**_{SN} 452 accounts for nonlinear perturbation of both the optical signal and the ASE noise and may thus be referred to as the nonlinear (signal + noise) perturbation matrix. An OSNP profile P_{SN}(z) 464 along the optical fiber link may then be computed by a power profile estimation unit 460 based on the nonlinear perturbation waveform **A₁**[*L*] 444 and the nonlinear perturbation matrix **G**_{SN} 452. The OSNP profile 464 computed using the nonlinear perturbation matrix **G**_{SN} 452 includes contributions from both the optical signal power and the ASE ("noise power") and is an example of the OSNP profile 312 P_{SN}(z).

In some implementations, the computations at this stage may use a correlation-based method (CM). In some implementations, the computations at this stage may use a minimum mean square error (MMSE) method. Different implementations of these methods are known in the art and may be used herein. Generally, an MMSE based method may be more computationally intensive, but has a finer spatial resolution than a CM based method. In an MSSE based method, an OSP profile may be computed, e.g., based on equation (2). In an CM based method, the OSNP profile 464 may be computed, e.g., based on equation (3). In an MSSE based method, the OSNP profile 464 may be computed, e.g., based on equation (3). ${P}_{SN} = α Re {\left({G}_{SN}^{H}{G}_{SN}\right)}^{- 1} Re \left({G}_{SN}^{H}{A}_{1}\right)$ (2) ${P}_{SN} = Re \left({G}_{SN}^{H}{A}_{1}\right)$ (3) In equations (2) and (3) superscript "H" denotes a Hermitian transpose. In some implementations, an optical noise power (ONP) profile along the optical fiber link 100, *P*_{N}(z), may then be computed by subtracting the OSP profile 462 from the OSNP profile 464: ${P}_{N} = {P}_{SN} - {P}_{S}$ (4) In equations (2)-(4), ***P***_{N} , ***P***_{SN}, and ***P***_{S} are vectors which elements are samples of corresponding optical power profiles at a series of locations zₖ, *k*=1, ..., *K* along the optical fiber link being sensed. Accordingly, the vectors ***P***_{SN}, and ***P***_{S} are digital representations of the OSNP profile *P*_{SN}(z) 312 or 464, and the OSP profile *P*_{S}(z) 462, respectively.

Each optical amplifier in the optical fiber link being sensed should result in a corresponding up-step in the OSNP profile 464 *P*_{*S*N}(z), followed by a gradual decline due to the optical fiber loss. Line optical amplifiers that are typically present in each optical fiber span, e.g. the line optical amplifiers 133 (FIG. 1), may inject a larger amount of the ASE and thus lead to a bigger step in the OSNP profile 464 than the tap-compensating optical amplifier in an eavesdropping device, such as e.g. the compensating optical amplifier 146 (FIG. 1). To detect changes associated, e.g., with the loss-compensated eavesdropping, step 320 of method 300 may include comparing the OSNP profile 464 to the reference OSNP profile 314 P_{Nref}(z), and detecting substantial differences between the two profiles being compared. The reference OSNP profile 314 P_{SNref}(z) may be, e.g., an OSNP profile 464 generated as described above at some earlier time prior to the installation of any eavesdropping device, or an average of two or more of such earliergenerated OSNP profiles. In some implementations, step 330 may include analyzing the OSNP change profile 322 ΔP_{SN}(z) that is computed based on the OSNP profile 464 P_{SN}(z) and the reference OSNP profile 314 P_{SNref}(z), e.g. according to equation (5): ${ΔP}_{SN} \left(z\right) = \left[{P}_{SN}\left(z\right)-{P}_{SNref}\left(z\right)\right]$ (5)

Ideally, the OSNP change profile ΔP_{SN}(z) 322 as a function of the location coordinate z should exhibit an abrupt step at the location of the loss-compensated eavesdropping apparatus that may be detected. Due to various approximations involved in computing optical power profiles along a lightpath based on a received signal, including the spatial granularity of the computation, the OSNP profile 464 P_{SN}(z) may be noisy, i.e. exhibit ripple at high spatial frequencies. In some implementations, the processing at step 320 may include smoothing the OSNP profile 464 (or 312) or the OSNP change profile Δ*P*_{*S*N}(*z*) 322, e.g., with a moving average filter, such as to at least lessen higher-frequency ripple that may be presented in the *P*_{*S*N}(*z*).

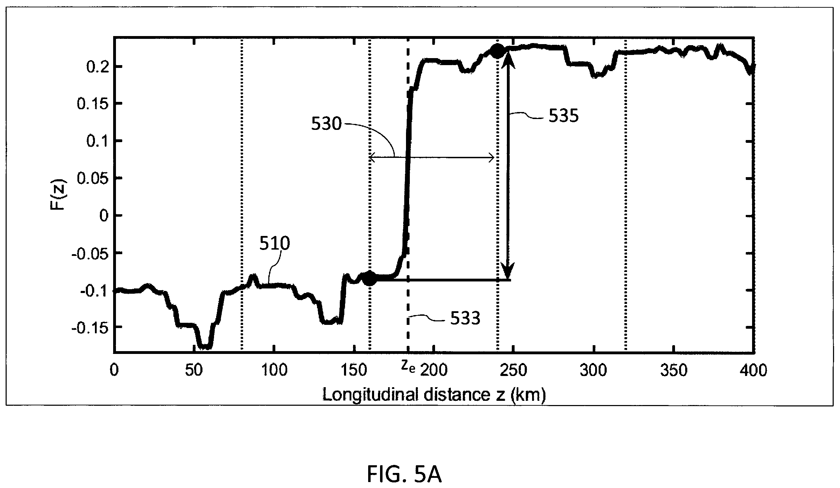

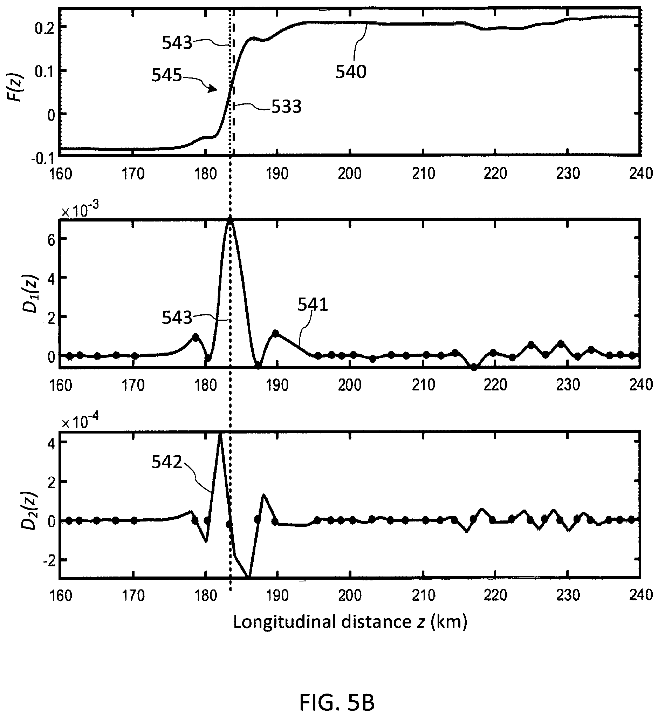

With reference to FIG. 3 and , in some implementations, step 330 ofFIGs. 5A-5D method 300 (FIG. 3) may include analyzing a normalized OSNP change profile *F*(z), e.g., the OSNP change profile 322 (or 464) divided by, e.g., one of the OSNP profile 322 (or 464) or the reference profile 314. FIG. 5A illustrates an example normalized OSNP change profile F(z) 510 computed for an example implementation of the optical fiber link 100 that includes five 80 km long spans 130 (N=5), with loss-compensated eavesdropping in the third span 530 ("tapped span"), approximately 10 km downstream of a nearest line optical amplifier 133 (location zₑ 533 indicated by a dashed vertical line). FIGs. 5B, 5C and 5D illustrate a segment 540 of the F(z) profile 510 along the tapped optical fiber span 530, and the first and second spatial derivatives of the F(z) profile for the tapped span 530, respectively. Computer simulations were performed for an example with 8dBm signal launch power at the optical transmitter, 69 GBd QPSK modulation, and a 0 dBm of extra ASE injected at the location 533.

In the illustrated example, the normalized OSNP change profile F(z) 510 is computed according to equation (6): $F \left(z\right) = \frac{{P}_{SN} \left(z\right) - {P}_{SNref} \left(z\right)}{{P}_{SN} \left(z\right)}$ (6) As can be seen from FIG. 5A, the normalized OSNP change profile 510 exhibits a signature of the concealed eavesdropping, enable identifying the extra ASE injection location 533 at least approximately. This signature may comprise an inflection in the *F*(z) profile about the location 533 of the ASE injection, which results in the tapped span 530 having a detectable end-to-end rise Δ*Fₘ* 535 in the *F*(z) profile; here Δ*Fₘ* = [*F*(*z*_{*m+*1})-*F*(*zₘ*)], and *zₘ* indicates the location of a distal (from the Rx) end of an *m*-th fiber span along the lightpath.

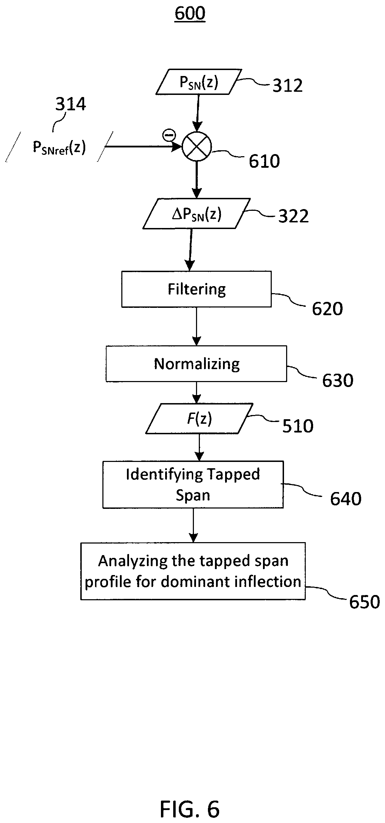

FIG. 6 illustrates method 600 that may be used to implement steps 320 and 330 of method 300 in some embodiments. In the illustrated example, method 600 may start with subtracting the reference profile 314 from the OSNP profile 312 at step 610 to obtain the OSNP change profile 322. At step 620, the OSNP change profile 322 may be filtered to reduce ripple. In some implementations, the filtering at step 620 may be applied to the OSNP profile 312 prior to step 610. At step 630, the OSNP change profile 322 may be normalized, e.g., by the OSNP profile 312 or the reference profile 314, as described above, to obtain a normalized OSNP change profile F(z), e.g., 510. At step 640, the normalized OSNP change profile, e.g. 510, may be analyzed to identify the tapped span, e.g., 530. Step 640 may include, e.g., identifying span boundaries based, e.g., on known length of each of the spans, and identifying a span with a largest end-to-end change, e.g. increase, (e.g., 535) in the F(z). In some implementations, the analysis at step 630 may include applying a threshold criteria to the OSNP change profile 322 or the normalized OSNP change profile *F*(z) 510 to detect the presence of likely eavesdropping. This analysis may include, e.g., comparing an end-to-end increase (e.g., 535) in the *F*(z) across a fiber span to a threshold, with the end-to-end increase (e.g., 535) in the *F*(z) across a fiber span exceeding a threshold value indicating likely eavesdropping. At step 650, a profile 540 of the F(z) 510 across the tapped span 530 (FIG. 5B) may be analyzed to determine the location of a dominant inflection point 545.

Referring to FIGs. 5C and 5D, in an example implementation, the processing at step 650 may include computing a first derivative *D*₁ 541, i.e., a rate of change, of the F(z) 540 along the tapped span 530, ${D}_{1} \left(z\right) = \frac{dF \left(z\right)}{dz}$, and identifying a location 543 where the *D*₁(*z*) has a maximum. In some cases, the *D*₁(*z*) may have several local maxima of approximately same magnitude, e.g., due to a residual ripple in the F(z). To improve the accuracy, in some implementations the processing at step 650 may further include computing a second derivative *D*₂ 542 of the F(z) along the tapped span 530, ${D}_{2} \left(z\right) = \frac{{dD}_{1} \left(z\right)}{dz}$*,* and identifying a location, e.g., 543, where the *D*₁(*z*) has a maximum and *D*₂(*z*₁) ≈ 0 to identify the dominant inflection 545 in the F(z).

In some implementations, method 600 may be modified, e.g., in relations to steps 620 and 630. E.g., in some implementations, the filtering step 620 may precede step 610, and/or follow step 630. In some implementations, the normalization step 630 may be omitted.

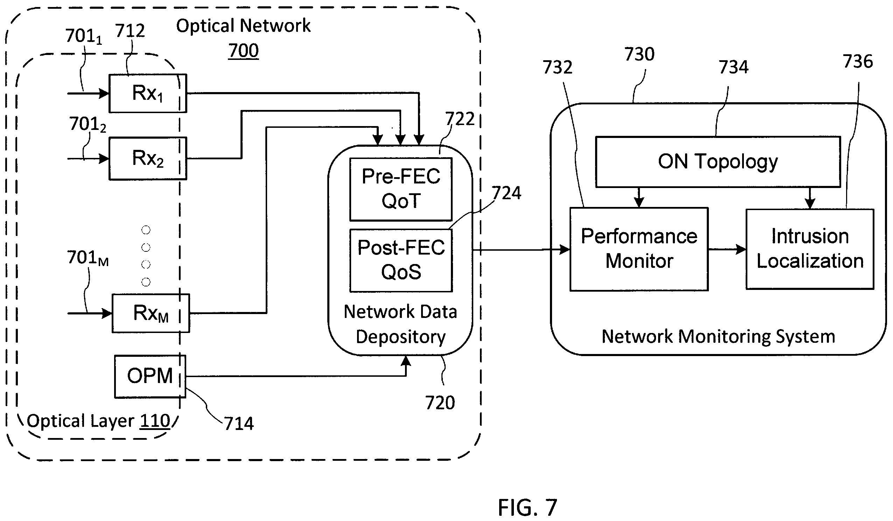

FIG. 7 schematically shows a portion of an optical fiber network 700 communicatively coupled to an NMS 730, illustrating an environment in which embodiments of the present disclosure may be practiced. The optical network 700 includes a plurality a plurality of *M*> 1 coherent optical receivers (coherent Rx) 712, which may be located at *K*≤ *M* different nodes (not shown) of the optical network 700. For example, one or more of the nodes may include two or more coherent optical receivers 712. Each of the coherent optical receivers 712 is an end point of a distinct lightpath 701₁, ..., 701*_{M}* in the optical network 700. Each coherent optical receiver 712 converts optical signals received from an optical transmitter (not shown) at the other end of the corresponding lightpath 701*ₘ, m* =1,.., M, into streams of received digital data using coherent E/O conversion, e.g. as described above with reference to the Rx 200 and FIG. 2.

The coherent optical receivers 712 may be further configured to output various performance indicators related to signal quality on respective lightpaths 701*ₘ*, which may be based on signal samples detected before performing FEC ("pre-FEC") and/or based on post-FEC symbol decisions. A measure of pre-FEC signal quality at an optical receiver may also be referred to as a quality of transmission (QoT) indicator. A measure of post-FEC signal quality at an optical receiver may be referred to as a quality of service (QoS) indicator. Corresponding measurements may be performed in electrical domain by digital signal processors of the coherent optical receivers 712, such as that Rx DSP 240, e.g., by estimating bit or symbol error rates, pre-FEC and post-FEC respectively. In some embodiments, the optical fiber network 700 may further include a plurality of optical power monitors (OPM) 714, which may be located at each, or at least some, of the optical nodes to monitor optical power received at the node from a corresponding optical fiber link or over a corresponding lightpath 701. Time records of QoT (722) and QoS (724) indicators collected from optical receivers 712 of the optical network 700 may be stored at a network data depository (NDD) 720. In some implementations, the NDD 720 may further store reference optical power profiles 314 for at least some of the lightpaths 701, such as the reference OSNP profile 314. NDD 720 may be embodied with one or more computer-implemented data servers communicatively connected to the network nodes of the optical fiber network 700.

The NMS 730 may be co-located with the NDD 720 or may be located remotely therefrom, e.g., being connected to communicate with the NDD 720 via, e.g., a suitable DCN using corresponding data network interfaces. The NMS 730 includes a network performance monitor (NPM) 732 configured to monitor information indicative of the pre-FEC and/or post-FEC signal quality at the optical receivers 112 of the optical fiber network 700, e.g. via the NDD 720. The NMS 730 may further include an optical network topology (ONT) module 734 and an intrusion localization module (ILM) 736. Each of these modules and the NPM 7132 may be implemented with a combination of hardware and software, e.g. using a suitably programmed computer system or systems including one or more digital processors coupled to one or more processor-readable tangible memory devices storing computer executable instructions.

Embodiments of the present disclosure may be implemented at least in part by the NMS 730 in cooperation with the NDD 720. An eavesdropping surveillance program may include a variety of detection techniques, each aimed at recognizing a specific type of eavesdropping attempt. Such program may distinguish eavesdropping attempts by whether the installation of the eavesdropping optical tap requires to cut the optical fiber. Clip-on couplers can be used as fiber taps and do not involve cutting the fiber for installation. Yet, they produce an extra optical loss on the tapped fiber, which can be detected and localized by analyzing changes in the optical power detected by OPMs 714. An installation of the loss-compensated eavesdropping apparatus 140 (FIG. 1) typically requires the optical fiber of the span to be cut, then spliced at the input and output of the eavesdropping apparatus 140. Such eavesdropping is potentially more robust and more complex to detect once the eavesdropping apparatus 140 is installed; the improved robustness comes from the greater amount of optical power that can be tapped off, as the amount of tapped power is only limited by the gain of the compensating optical amplifier 146, which may be as high as 20dB which is more than enough for the eavesdropping optical receiver 144 to recover the information carried by the tapped off signal. The necessity to temporarily cut the fiber when installing loss-compensated taps can be advantageously leveraged, using signal interruptions as triggers for performing at least sone of the analyses described above.

A fiber cut anywhere in the optical network 700 results in the QoS failure (i.e. the interruption) for all lightpaths 701*ₘ* going through the severed fiber span. Lightpath failures may be detected through various QoT and/or QoS performance indicators. For instance, a non-zero post-FEC BER value directly indicates a QoS failure/interruption on a corresponding lightpath. In an example implementation, detecting simultaneous temporary QoS failures on one or more overlapping lightpaths, e.g. as detected by the network performance monitor 732, may be a trigger to perform further analysis on the affected lightpaths. This may include, e.g., analyzing time records of collected OPM values to determine if the lightpath interruption is due to a fiber cut. Upon such a detection, an enquiry may be conducted whether an approved maintenance operation has been necessary to repair the cut, or whether the cut has been "self-repaired". The latter case may indicate possible installation of a loss-compensated fiber tap and may trigger further investigation. Such an investigation may include comparing the optical loss of the span before and after the interruption. A lasting significant increase in span loss may indicate a likely installation of an uncompensated fiber tap, which location could be determined, e.g., by means of OTDR or a conventional PPE. If the span optical loss after the interruption appears to be equal to the span optical loss before the interruption, the NMS 730 may proceed to perform the ASE injection analysis described above with reference to FIGs. 3-6. In an example implementation, the ILM 736 may collect a sequence of Rx signal samples from a coherent Rx at the end of an affected lightpath and implement the processing described above with reference to FIGs. 3, 4, and 6.

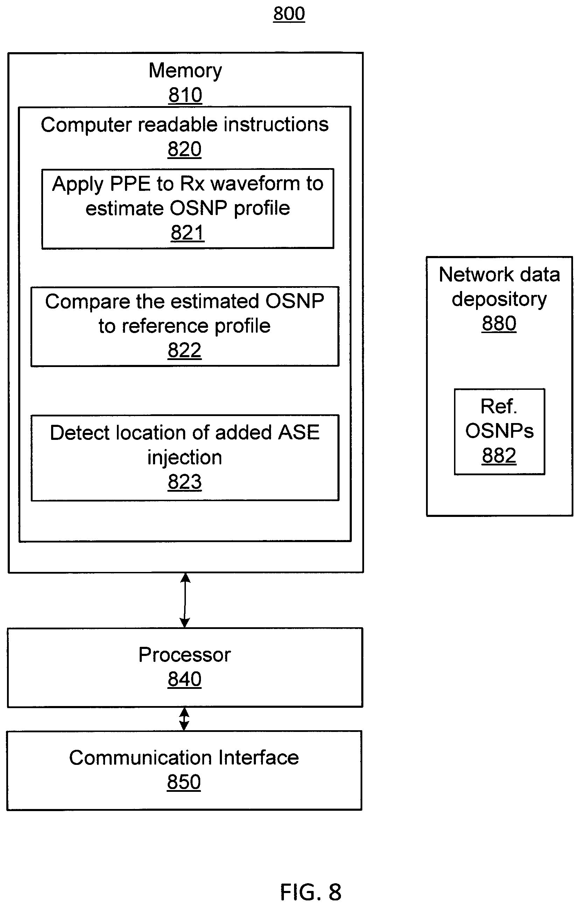

FIG. 8 illustrates an example network monitoring apparatus 800 ("apparatus 800") according to an embodiment of the present disclosure. The apparatus 800 may be an embodiment of the NMS 150 or the NMS 730 described above with reference to FIGs. 1 and 7, respectively. The apparatus 800 is a combination of hardware and software executable by the hardware to perform various steps and operations of the method described above with reference to FIGs. 3, 4, and 6. The hardware includes a digital processor 840, a communication interface 850, and one or more non-transitory memory devices 810. The communication interface 850 is operable to receive sequences of signal samples, e.g., 241 or 301, coherently detected by an Rx of a lightpath being investigated. In some implementation, the communication interface 850 may be operable to receive a post-FEC data signal, e.g., 247 or 423, from the Rx. The sequence of signal samples and the post-FEC data signal may be provided, e.g. over a data communication network, directly from the Rx of the lightpath being investigated and/or via a network data depository, e.g., 720. The one or more memory devices 810 store computer readable instructions 820 which, when executed by the digital processor 840, may cause the digital processor 840 to perform the instructions of the method diagrams illustrated in FIGs. 3, 4, and/or 6. In the example embodiment illustrated in FIG. 8, the instructions 820 include: instructions 821 to estimate an OSNP profile for the lightpath by, e.g., applying a digital PPE algorithm to an Rx waveform, instructions 822 to compare the estimated OSNP profile to a reference profile, and instructions 833 to detect the location of added extra ASE injection based on the comparison. In an example implementation, the instructions 821 may include instructions to perform operations described above with reference to FIG. 4. The reference profile used by instructions 822 may be stored in memory 810 or received from an NDD 880. The NDD 880 may be an example of the NDD 720 and may include memory 882 storing reference OSNP profiles for a plurality of lightpaths in the optical fiber network.

Example embodiments described above, e.g. in the summary section and with reference to any one or more of the FIGs. 1 to 8, provide a method for detecting loss-compensated eavesdropping in an optical network (e.g., 700, FIG. 7), the method comprising: estimating (e.g., 310, FIG. 3; 400, FIG. 4) a first optical power profile (OPP) (e.g., 312, FIGs 3, 6; 464, FIG. 4); along a lightpath (e.g., 132, FIG. 1; 701n, FIG. 7) in the optical network based on a received digital waveform (e.g., 432, FIG. 4) detected by a coherent optical receiver (e.g., 120, FIG. 1; 200, FIG. 2; 712, FIG. 7) of the lightpath, the received digital waveform comprising amplified spontaneous emission (ASE) accumulated along the lightpath. The method further comprises comparing the first OPP to a reference OPP (e.g., 314, FIGs. 3, 6) to detect an injection of extra ASE into the lightpath. In some implementations, the method may comprise determining a location (177, 533) of the injection.

In any of the above implementations, the estimating may comprise applying a computer-implemented algorithm (e.g., 450, 460, FIG. 4) for receiver-based power profile estimation to the received digital waveform (432).

Any of the above implementations of the method may comprise obtaining the reference OPP (e.g., 314, FIG. 3) along the lightpath based on one or more earlier received digital waveforms detected by the coherent optical receiver prior to the injection.

In any of the above implementations, the estimating the first OPP may comprise applying a nonlinear perturbation algorithm (e.g., 450, FIG. 4) to the received digital waveform comprising the ASE.

Any of the above implementations of the method may comprise generating a nonlinear perturbation matrix **G**_{SN} (e.g., 452, FIG. 4) based, in part, on the received digital waveform comprising the ASE.

Any of the above implementations of the method may comprise using a minimum mean square error (MMSE) algorithm to estimate the first OPP.

In any of the above implementations, the comparing may comprise computing a difference (e.g., at 610, FIG. 6) between the first OPP and the reference OPP to obtain a difference profile (e.g., 322, FIGs. 3, 6). Some implementations may comprise applying a smoothing filter (e.g., 620, FIG. 6) to one of the first OPP or the difference profile. Some implementations may comprise using one of the first OPP or the difference profile to normalize (630) the difference profile. Some implementations may comprise determining a location (e.g., 543, ) of a dominantFIGs, 5A-5C inflection (e.g., 545, FIGs. 5B-5C) in the difference profile. Some implementations may comprise computing a profile of at least one of: a first derivative (e.g., 541, FIG. 5C) of the difference profile or a second derivative (e.g., 542, FIG. 5D) of the difference profile (e.g., 540, FIG. 5B). Any of the above implementations may comprise identifying an optical fiber span (130n, 530) comprising a source (146) of the extra ASE based on the difference profile, and estimating a location (177, 533) of the source of the extra ASE in the identified optical fiber span based on a segment (540) of the difference profile corresponding to the identified optical fiber span.

Example embodiments described above, e.g. in the summary section and with reference to any one or more of the FIGs. 1 to 8, provide an apparatus (e.g., 800, FIG. 8). The apparatus comprises a digital processor (e.g., 840, FIG. 8) and an interface (e.g., 850) coupled to the digital processor and configured to receive data (e.g., 301, 421, 423) collected from a coherent optical receiver (e.g., 120, 200, 712) in an optical fiber network (e.g., 700), the data comprising information indicative of a received digital waveform (e.g., 432, FIG. 4) detected by the coherent optical receiver. The apparatus further comprises a memory (e.g., 810, FIG. 8) coupled to the digital processor, the memory comprising instructions (e.g., 820, FIG. 8) which, when executed by the processor, cause the processor to (821) estimate a first optical power profile (OPP) (e.g., 312, 464) along a lightpath (e.g., 132, 701n) in the optical fiber network based on the received digital waveform (e.g., 432) detected by the coherent optical receiver, the received digital waveform comprising amplified spontaneous emission (ASE) accumulated along the lightpath, and (822) to compare the first OPP to a reference OPP (e.g., 314, FIGs. 3, 6) to detect an injection of extra ASE along the lightpath.

In some implementations of the apparatus. the instructions may comprise instructions (e.g., 610, FIG. 6) to compute a difference profile (e.g., 322, FIGs. 3, 6) based on the first OPP and the reference OPP, to identify an optical fiber span (e.g., 130n, 530, 701n) along the lightpath comprising a source (e.g., 146, FIG. 1) of the extra ASE based on the difference profile, and to estimate a location (e.g., 177, FIG. 1; 533, FIG. 5A) of the source of the extra ASE in the identified optical fiber span based on a segment (e.g., 540, FIG. 5B) of the difference profile corresponding to the identified optical fiber span.

The example embodiments described above are not intended to be limiting, and many variations will become apparent to a skilled reader having the benefit of the present disclosure. For example, in some implementations the state of polarization (SOP) of the optical signal may be monitored, e.g. at an optical receiver, and collected SOP information may be used in eavesdropping detection. Furthermore, in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description with unnecessary detail. Thus, for example, it will be appreciated by those skilled in the art that block diagrams herein can represent conceptual views of illustrative circuitry embodying the principles of the technology. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future.

Furthermore, any mathematical concepts (such as functions, values, sets, sequences) mentioned in this disclosure may be represented or approximated using digital or analog circuitry, or a combination of digital and analog circuitry. For example, a continuous profile may be approximated by a discrete profile. Inversely, a discrete profile may be approximated by a continuous profile, e.g. by interpolation or smoothing of an original profile, e.g. using polynomials, splines, or sync functions.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. A method (300, 600) for detecting a loss-compensated eavesdropping in an optical network (700), the method comprising:
estimating (310, 400) a first optical power profile (OPP) (312, 464) along a lightpath (132, 301ₙ) in the optical network based on a received digital waveform (243, 432) detected using a coherent optical receiver (120, 200, 712) of the lightpath, the received digital waveform comprising amplified spontaneous emission (ASE) accumulated along the lightpath; and
comparing (320, 610) the first OPP to a reference OPP (314) to detect an injection of extra ASE into the lightpath.

2. The method of claim 1, comprising determining a location (177, 533) of the injection.

3. The method of claim 1 or 2, wherein the estimating comprises applying a computer-implemented algorithm (450) for receiver-based power profile estimation to the received digital waveform (432).

4. The method of claim 1, 2, or 3 comprising obtaining the reference OPP (314) along the lightpath based on one or more earlier received digital waveforms detected by the coherent optical receiver prior to the injection.

5. The method of any one of claims 1 to 4 wherein estimating the first OPP comprises applying a nonlinear perturbation algorithm (450) to the received digital waveform comprising the ASE.

6. The method of any one of claims 1 to 5 comprising generating a nonlinear perturbation matrix **G**_{SN} (452) based, in part, on the received digital waveform comprising the ASE.

7. The method of any one of claims 1 to 6 wherein estimating the first OPP comprises using a minimum mean square error (MMSE) algorithm.

8. The method of one of claims 1 to 7 wherein the comparing comprises computing a difference (610) between the first OPP and the reference OPP to obtain a difference profile (322).

9. The method of claim 8 comprising applying a smoothing filter (620) to one of the first OPP or the difference profile.

10. The method of claim 8 or 9 comprising using one of the first OPP or the difference profile to normalize the difference profile.

11. The method of claim 8, 9, or 10 comprising determining a location (543) of a dominant inflection (545) in the difference profile.

12. The method of any one of claims 8 to 11 comprising computing a profile of at least one of: a first derivative (541) of the difference profile or a second derivative (542) of the difference profile.

13. The method of any one of claims 8 to 12 comprising:
identifying an optical fiber span (130n, 530) comprising a source (146) of the extra ASE based on the difference profile, and
estimating a location (177, 533) of the source of the extra ASE in the identified optical fiber span based on a segment (540) of the difference profile corresponding to the identified optical fiber span.

14. An apparatus (800) comprising:
a digital processor (840);
an interface (850) coupled to the digital processor and configured to receive data (301, 421, 423) collected from a coherent optical receiver (120, 712) in an optical fiber network (700), the data comprising information indicative of a received digital waveform (432) detected by the coherent optical receiver;
a memory (810) coupled to the digital processor, the memory comprising instructions (820) which, when executed by the processor, cause the processor to
(821) estimate a first optical power profile (OPP) (312, 464) along a lightpath (132, 701n) in the optical fiber network based on the received digital waveform (432) detected by the coherent optical receiver, the received digital waveform comprising amplified spontaneous emission (ASE) accumulated along the lightpath; and
(822) compare the first OPP to a reference OPP (314) to detect an injection of extra ASE along the lightpath.

15. The apparatus of claim 14, wherein the instructions comprise instructions (610) to compute a difference profile (322) based on the first OPP and the reference OPP, to identify an optical fiber span (130n, 530) along the lightpath comprising a source (146) of the extra ASE based on the difference profile, and to estimate a location (177, 533) of the source of the extra ASE in the identified optical fiber span based on a segment (540) of the difference profile corresponding to the identified optical fiber span.
